# DEMANDE DE BREVET EUROPEEN

(11) **EP 0 574 325 A1**
(43) Date de publication de la demande: **15.12.1993**
(21) Numéro de dépôt: 93401495.2
(22) Date de dépôt: 11.06.1993
(51) Int. Cl.: G02B 6/06, G02B 13/06, G02B 13/04, G02B 123/00, G02B 13/14

(54) **Dispositif de veille omnidirectionnel à objectif grand angulaire couvrant tout l'espace environnant**

(30) Priorité: 12.06.1992 FR 9207111
(71) Demandeur: THOMSON-CSF, 75008 Paris (FR)
(72) Inventeur: Rabault, Denis, F-92402 Courbevoie Cédex (FR); Pepin, Christian, F-92402 Courbevoie Cédex (FR); Rollin, Joel, F-92402 Courbevoie Cédex (FR)
(74) Mandataire: Lincot, Georges

(57) **Abrégé**

L'invention concerne un dispositif de veille omnidirectionnel comprenant un objectif grand angulaire (6) de type "fish-eye", un toron (1) de fibres optiques divisé en n branches (B1 à Bn) et comprenant deux extrémités, la première extrémité (2) étant dans le plan de formation d'image de l'objectif (6) et la seconde extrémité étant composée des n sorties (S1 à Sn) des n branches (B1 à Bn), chaque sortie étant associée à un détecteur matriciel (D1 à Dn) pour y projeter une partie de l'image formée par l'objectif (6).

Application aux dispositifs de veille ou de surveillance, notamment dans le domaine des radiations infrarouges.

## Description

Le domaine de l'invention est celui de la veille ou de la surveillance panoramique nécessitant une couverture angulaire importante. Suivant les conditions dans lesquelles la veille ou la surveillance est effectuée, le domaine spectral concerné est celui des radiations visibles et/ou infrarouges.

L'objet de l'invention concerne un dispositif de veille panoramique omnidirectionnel à objectif grand angulaire et permettant de couvrir tout l'espace environnant.

L'invention s'applique aussi bien à la veille aéroportée que terrestre, sans limitation du domaine spectral :
- en veille aéroportée, l'observation couvre alors la totalité de l'espace, c'est-à-dire 4Π stéradians ;
- en version sol air, la couverture est limitée en demi espace supérieur.

L'invention s'applique plus particulièrement pour la détection à longue distance de points chauds, tels que missiles ou propulseurs, dans la bande 3 à 5 micromètres.

Pour obtenir une couverture d'espace angulaire importante, la plupart des systèmes de veille actuels utilisent un système optomécanique de balayage associé à un détecteur. Le type de détecteur utilisé - détecteur CCD au silicium, détecteur CCD au platine - silicium, détecteur CCD hybride au mercure - cadmium - tellure sur silicium, est choisi de sorte que son domaine spectral de sensibilité coïncide avec le domaine des radiations concerné (visible ou infrarouge).

Ce détecteur se présente classiquement sous la forme d'une barrette longitudinale comprenant un nombre réduit de rangées de capteurs élémentaires. Le système optomécanique effectue le balayage de la barrette selon une direction de balayage (balayage trame) ou deux directions (balayage ligne et trame) suivant les dimensions de la barrette. Le balayage est effectué à l'aide d'un miroir oscillant ou d'un prisme tournant selon une certaine période, cette période définissant la cadence de balayage.

La société demanderesse a par exemple réalisé un système à tête de balayage par miroir couvrant un champ de 120 degrés par 80 degrés dans le domaine des radiations infrarouges à une cadence de 2 Hertz. Par ailleurs, un exemple de système de balayage par prisme est décrit dans le journal SPIE volume 782, pages 38 et suivantes. Ce prisme permet une exploration de 3,3 stéradians à une fréquence de 3,6 Hertz.

Les inconvénients des systèmes basés sur une exploration par balayage sont multiples :
- les cadences d'exploration sont faibles car limitées par les besoins en portée : en effet ces besoins imposent soit un champ objet élémentaire très restreint, soit un temps d'intégration élevé des charges des détecteurs ; la résolution que doit fournir un tel système (typiquement 0,5 degré) ne peut dès lors être atteinte qu'au détriment de la vitesse de balayage ;
- les rendements de balayage sont médiocres car, au cours du balayage, les capteurs élémentaires voisins sont amenés à "voir" les mêmes portions d'espace ;
- ce type de système à très large champ de vision nécessite des hublots de fermeture (dômes) de réalisation complexe et de coût élevé.

Plus récemment, le développement des matrices détectrices bidimensionnelles de capteurs élémentaires a permis de s'affranchir de l'utilisation du système de balayage optomécanique. En effet, un détecteur matriciel capte directement toute l'image de la scène observée par projection de cette image sur le détecteur à l'aide d'un groupe optique de focalisation adapté. Par exemple, le journal SPIE volume 1488, pages 368 à 375, décrit l'utilisation dans la bande infrarouge d'un objectif fixe à très grand champ, appelé classiquement "fish-eye" dans le domaine de la photographie, associé à une matrice détectrice de 512 x 512 capteurs élémentaires.

Avec de tels détecteurs bidimensionnels, l'exploration du paysage peut s'effectuer à une cadence très élevée, limitée seulement par les temps d'intégration des charges libérées au niveau de chaque capteur proportionnellement à l'éclairement qu'il reçoit. Mais, l'inconvénient majeur de ce type de solution est sa faible résolution angulaire. La résolution angulaire peut se définir comme l'angle minimal pour lequel deux objets situés à une distance correspondant à une portée donnée, sont vus distinctement par un même capteur. Dans le cas de détecteur matriciel, la résolution est en fait directement limitée par la surface des capteurs élémentaires et donc, pour une matrice de dimension donnée, par le nombre de capteurs élémentaires dans cette matrice. Citons par exemple l'article paru dans le journal SPIE, volume 1488 pages 368 à 375, où est présenté un objectif grand champ (112°), ouvert à F/1,2 pour former une image sur une matrice platine-silicium de 512 x 512 capteurs élémentaires.

De plus, que ce soit avec ou sans système optomécanique de balayage, les systèmes de l'art antérieur n'offrent pas une couverture de tout l'espace environnant. Afin d'obtenir une telle couverture, avec une bonne résolution angulaire et une cadence de "rafraîchissement" d'image élevée, l'invention propose d'utiliser plusieurs détecteurs matriciels conjugués, par l'intermédiaire d'un toron de fibres optiques séparé en plusieurs branches, à un objectif grand angulaire unique.

Plus précisément, le dispositif de veille omnidirectionnel à objectif grand angulaire couvrant tout l'espace environnant selon l'invention, est caractérisé en ce qu'il comporte au moins un module de détection comprenant au moins deux détecteurs matriciels conjugués optiquement de l'unique objectif grand angulaire par l'intermédiaire d'un toron de fibres optiques dont une première extrémité est située dans le plan de formation d'images de l'objectif grand angulaire, et en ce que le toron est divisé en plusieurs branches pour former, en son autre extrémité, autant de sorties que de détecteurs matriciels, chaque sortie étant associée à un détecteur pour y projeter une partie de l'image formée par l'objectif.

Dans une application sol-air, le dispositif de veille selon l'invention ne comporte qu'un seul module de détection pour permettre l'observation d'un demi-espace. Pour couvrir tout l'espace, c'est-à-dire 4Π stéradians, il convient d'associer deux modules de détection c'est-à-dire deux objectifs grand angulaire, chacun étant associé à au moins deux détecteurs matriciels à travers un toron à sorties multiples.

L'invention permet d'utiliser simultanément plusieurs détecteurs matriciels associés à un seul objectif grand angulaire. Ceci permet d'une part de multiplier le nombre de capteurs élémentaires, et donc d'obtenir une résolution compatible avec les portées de détection habituellement demandées pour une dispositif de veille, et d'autre part, de bénéficier de l'uniformité de résolution dans tout le champ d'observation du fait de la loi de distorsion conservative qui régit les objectifs grand angulaire.

L'invention permet également d'obtenir un taux de couverture de l'espace observé proche de un. Afin de supprimer totalement l'existence de zones aveugles, dues au fait que seule la surface correspondante au coeur des fibres permet de recueillir une radiation, il peut être avantageux d'effectuer un micro-balayage de l'image de la scène formée sur l'entrée du toron de fibres optiques.

L'arrangement des fibres dans le toron peut être avantageusement adapté à chacune de ces extrémités de manière à supprimer toute perte d'informations : à l'entré, le toron présente une surface circulaire correspondant à celle de l'image de la scène formée par l'objectif, alors que les sorties du toron peuvent avoir une forme rectangulaire grâce à un réaménagement adapté de la configuration des fibres optiques dans chaque branche du toron, cette forme rectangulaire correspondant à celle des détecteurs matriciels associés.

Il est à noter également que l'invention permet de simplifier l'équipement d'interface avec l'environnement extérieur, puisque un ou deux dômes hémisphériques suffisent respectivement à l'observation d'un demi-espace ou de l'espace complet. La simplicité du dispositif selon l'invention se retrouve également dans l'absence de système optomécanique associé puisque l'utilisation de détecteurs matriciels permet de s'affranchir d'un balayage grande amplitude.

L'invention sera mieux comprise et d'autres caractéristiques et avantages apparaîtront à la lecture de la description qui suit, faite en référence aux deux figures annexées qui représentent respectivement :
- la figure 1, une présentation d'un toron de fibres optiques utilisé dans le dispositif selon l'invention, illustrant plus particulièrement la structure et l'organisation des fibres optiques à l'entré et aux sorties de ce toron ;
- la figure 2, une forme de réalisation du dispositif de veille selon l'invention.

L'invention utilise un toron de fibres optiques pour effectuer un transport d'images. De telles utilisations sont connues : par exemple le brevet FR 2 647 894 décrit un système de reconnaissance aérienne infrarouge dans lequel un toron de fibres optiques simule un détecteur linéaire à partir d'un détecteur matriciel de manière à pouvoir utiliser un tel détecteur en association avec un système à balayage ; pour obtenir cet effet, le toron de fibres optiques présente une surface d'entrée de forme allongée, qui reprend l'image de la scène observée formée par une optique d'entrée à balayage, et une surface de sortie rectangulaire apte à former, à l'aide d'une optique relais, une image sur le détecteur matriciel. Un tel toron permet d'utiliser un détecteur matriciel en association avec un système de formation d'images par balayage. Un autre exemple d'utilisation d'un toron de fibres dans un transport d'images est illustré par un article du compte-rendu paru dans l'IEEE, New-York, USA, pages 111-114, Octobre 1983 sur la conférence de l'EASCON 83 et intitulé "Mosaïc CCD focal plane technology for electro-optical space surveillance" ; cet article propose un système où des torons de fibres optiques permettent de simuler à partir de quatre détecteurs matriciels un unique détecteur matriciel de très grande dimension. Dans ce système, il n'y a pas de transformation d'image entre l'entrée et la sortie des torons de fibres optiques puisque les images des détecteurs sont simplement accolées pour en simuler une de grande dimension.

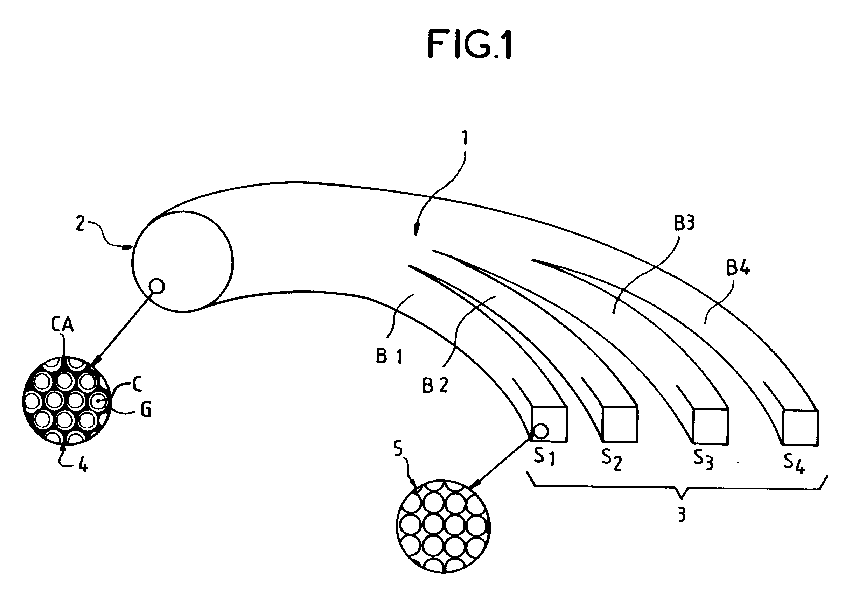

Le toron de transport d'images utilisé dans la présente invention et illustré à la figure 1 est de structure et de fonction totalement différente de celles qui viennent d'être succinctement décrites. Sur la figure 1, le toron de fibres optiques 1 présente deux extrémités 2 et 3, l'extrémité 2 est à sortie unique alors que l'extrémité 3 présente n sorties S1, S2...Sn, n étant égal à 4 sur la figure. A son extrémité 2, le toron a une forme cylindrique et la maille du réseau de fibres optiques est de type hexagone compact, comme illustré par le détail grossi 4 de l'extrémité 2. Les fibres optiques présentent un coeur C entouré d'une gaine G et sont maintenues selon une configuration donnée grâce à une colle d'indice adapté CA. Une configuration de type hexagone compact telle que représentée permet d'obtenir un taux de remplissage maximum.

Dans sa partie centrale, le toron est divisé dans n branches, B1 à Bn, n étant égal à 4 sur la figure. Les extrémités de ces branches forment les sorties S1 à Sn de l'extrémité 3 du toron. Chaque sortie est associée à un détecteur matriciel. La séparation du toron de fibres en n branches ayant approximativement le même nombre de fibres peut se faire selon une loi quelconque, par exemple en secteurs ou en anneaux.

Afin d'obtenir une bonne compatibilité optique sans perte d'information entre chaque sortie et chaque détecteur :
- les sorties S1 à Sn des branches B1 à Bn ont une forme adaptée ou identique à la forme du détecteur matriciel associé, c'est-à-dire approximativement carrée ou rectangulaire ;
- le nombre de fibres optiques dans chaque branche et leur arrangement à chaque extrémité S1 à Sn sont adaptés au nombre de capteurs élémentaires de chaque détecteur associé.

Dans l'exemple de réalisation, les fibres optiques ont un arrangement de type matriciel tel qu'illustré sur le détail grossi 5. L'arrangement de ces fibres et les passes spatios du réseau de fibres sont en fait ajustés de manière à ce qu'à chaque extrémité de fibre corresponde approximativement la surface photosensible d'un capteur élémentaire du détecteur associé.

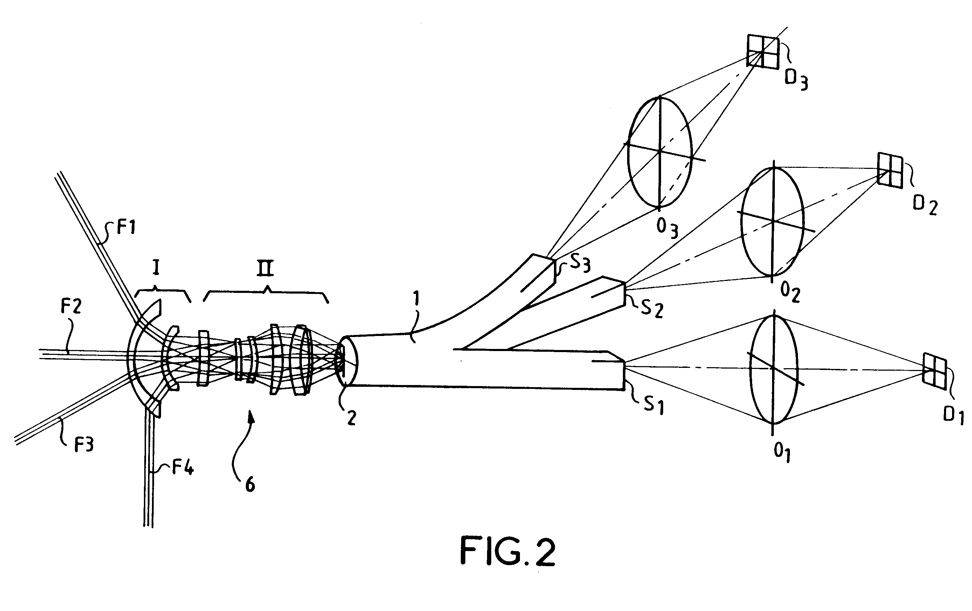

La mise en oeuvre des couplages des extrémités du toron de transport d'images qui vient d'être décrit est détaillé dans ce qui suit, en référence à la figure 2 qui représente un mode de réalisation d'un dispositif de veille omnidirectionnel selon l'invention. Le dispositif comporte un objectif grand angulaire ou "fish-eye" 6 couplé optiquement à l'extrémité 2 du toron 1, chaque sortie S1 à S3 du toron 1 étant couplée optiquement et respectivement à un détecteur matriciel D1 à D3, via un élément optique de relais, respectivement O1 à O3.

L'objectif grand angulaire utilisé comporte classiquement un groupe de lentilles divergentes I et un groupe de lentilles convergentes II, au plan focal duquel est placé l'assemblage de fibres optiques collé et poli de l'extrémité 2 de toron 1. Le "fish-eye" possède un champ de vues d'au moins 180° dont l'étendue est illustrée par la présence de quelques rayons lumineux forment des faisceaux F1 à F4. Le diamètre et la forme cylindrique de l'extrémité 2 sont adaptés au mieux à la forme circulaire de l'image formée par le "fish-eye" 6. L' arrangement des fibres optiques à cette extrémité 2, de type hexagonal compact, permet de réduire les zones aveugles situées entre les fibres optiques, qui ne transmettent pas de rayons lumineux.

A l'autre extrémité du toron 1, chaque sortie S1 à Sn (n = 3 sur la figure) délivre les informations partielles correspondant à une partie de l'image formée par la "fish-eye" 6 sur l'extrémité d'entrée 2 à un détecteur matriciel associé D1 à Dn : la géométrie et l'arrangement des fibres optiques n'étant pas du même type au deux extrémités du toron 1, il n'est pas possible de conserver une loi simple de recomposition d'images à partir des n images partielles formées sur les n détecteurs matriciels D1 à Dn.

Une phase initiale de calibration du dispositif est donc nécessaire pour repérer, pour chaque capteur élémentaire de chaque détecteur, la direction pointée dans l'espace. Les moyens de mise en oeuvre de cette calibration sont à la portée de l'homme de l'art sous la forme, par exemple, d'un circuit de traitement de signal adapté comportant un générateur d'adresses couplé à une mémoire d'image pour repérer la correspondance entre la position d'un capteur et la direction qu'il pointe. Il apparaît ainsi clairement que lors de la séparation du toron cylindrique en n branches, les fibres optiques peuvent être réparties de manière totalement arbitraire.

Des éléments optiques de relais, 01 à 0n (n = 3 sur la figure), sont constitués d'une lentille ou d'un groupe de lentilles d'ouverture et de grandissement adaptés, permettent la conjugaison optique entre chaque sortie S1 à Sn du toron 1 et le détecteur matriciel correspondant D1 à Dn.

Chaque détecteur est confiné dans un cryostat refroidi du fait que dans l'exemple de réallsation décrit seuls les radiations infrarouges sont utiles. Pour un bon fonctionnement en rayonnement infrarouge, il est de plus nécessaire de limiter au maximum les flux lumineux parasites provenant des éléments de structure, et détectés par exemple par "effet Narcisse". A cet fin, la pupille de sortie de chaque optique de relais est placée sur l'écran froid du cryostat associé.

Concernant la pupille d'entrée de chaque optique de relais, il est nécessaire que cette pupille soit adaptée au flux lumineux sortant des fibres au niveau de chaque sortie S1 à Sn pour obtenir un bon rendement de couplage entre le toron 1 et chaque optique de relais 01 à 0n. Les fibres étant collées parallèlement, l'effet recherché est obtenu par rejet des pupilles d'entrée à l'infini. Globalement, chaque groupe optique de relais 01 à On réalisé une conjugaison entre la pupille de sortie de chaque branche du toron de fibre optique avec l'écran froid du cryostat associé.

Le dispositif qui vient d'être décrit permet d'effectuer une observation sur un demi-espace de 2Π stéradians ; pour obtenir une observation sur un espace complet de 4Π stéradians, il convient d'associer deux modules de détection identiques à celui qui vient d'être décrit, chacun de ces modules observant un demi-espace complémentaire de l'autre.

L'invention n'est pas limitée aux exemples de réalisation décrite et représentée. Par exemple, pour éliminer les zones aveugles situées à l'interstice des fibres optiques à l'entrée du toron de transport d'images, il convient d'effectuer un micro-balayage consistant à effectuer en faisceau convergent un déplacement de faible amplitude de l'image formée par un objectif grand angulaire sur l'extrémité d'entrée du toron. Des moyens pour effectuer un tel micro-balayage sont connus de l'homme de l'art et sont décrits par exemple dans les brevets EP-289182 ou FR-2 647 995. De tels systèmes mettent en oeuvre une lame à faces parallèles placée en faisceau convergent et tournant ou vibrant autour de l'axe optique. La très faible nutation de l'image ainsi créée, conditionnée par l'épaisseur et l'inclinaison de la lame, permet de balayer les zones aveugles.

D'autre part, le nombre et la longueur des branches créés par division du toron de fibres optiques principal peuvent être variables et sont définis par exemple à partir des contraintes de mise en place du dispositif.

Dans le cas d'une utilisation en lumière visible, les groupes optiques de relais entre les sorties du toron et les détecteurs correspondant ne sont pas nécessaires et la conjugaison se fait simplement en plaçant chaque détecteur directement en regard de la sortie de chacune des branches correspondantes.

## Revendications

**1 -** Dispositif de veille omnidirectionnel à objectif grand angulaire couvrant tout l'espace environnant, caractérisé en ce qu'il comporte au moins un module de détection comprenant au moins deux détecteurs (D1 à Dn) conjugué optiquement de l'unique objectif grand angulaire (6) par l'intermédiaire d'un toron de fibres optiques (1) dont une première extrémité (2) est situé dans le plan de formation d'image de l'optique grand angulaire, et en ce que le toron (1) est divisé en plusieurs branches (B1 à Bn) pour former, en son autre extrémité (3), autant de sortie (S1 à Sn) que de détecteurs matriciels (D1 à Dn), chaque sortie étant associée à un détecteur pour y projeter une partie de l'image formée par l'objectif (6).

**2 -** Dispositif selon la revendlcation 1, caractérisé en ce qu'il comporte un seul module de détection pour couvrir un demi-espace environnant de 2Π stéradians.

**3 -** Dispositif selon la revendication 1, caractérisé en ce qu'il comporte deux modules de détection pour couvrir un espace entier de 4Π stéradians.

**4 -** Dispositif selon l'une des revendications précédentes, caractérisé en ce que la première extrémité (2) du toron (1) est de forme cylindrique, les fibres ayant une configuration de type hexagonal compact au niveau de cette première extrémité, et en ce que les sorties (S1 à Sn) de la seconde extrémité (3) du toron (1) sont de la forme des détecteurs matriciels associés (D1 à Dn), les fibres ayant un agencement de type rectangulaire au niveau de ces sorties (S1 à Sn).

**5 -** Dispositif selon l'une des revendications précédentes, caractérisé en ce que la répartition des fibres dans chacune des branches (B1 à B6) est arbitraire, en ce que le nombre et l'agencement des fibres aux sorties (S1 à Sn) du toron (1) sont ajustés de sorte qu'à chaque extrémité de fibre corresponde un capteur élémentaire du détecteur associé, et en ce que la correspondance entre l'information fournie par chaque capteur élémentaire et la direction d'espace associée à cette information est effectuée au cours d'une phase de callbration afin de recomposer l'image formée par l'objectif (6).

**6 -** Dispositif selon l'une des revendications précédentes utilisé dans le domaine des radiations infrarouges, caractérisé en ce que chaque sortie (S1 à Sn) du toron (1) est conjugué optiquement à chaque détecteur matriciel associé (D1 à Dn) par l'intermédiaire d'un élément optique de relais (D1 à Dn).
